# EUROPÄISCHE PATENTSCHRIFT

(11) **EP 3 191 701 B1**
(45) Veröffentlichungstag und Bekanntmachung des Hinweises auf die Patenterteilung: **01.05.2019**
(21) Anmeldenummer: 15795195.5
(22) Anmeldetag: 18.11.2015
(51) Int. Cl.: F02G 5/00

(54) **VERFAHREN ZUM ERWÄRMEN EINES BETRIEBSSTOFFS SOWIE VORRATSBEHÄLTERHEIZUNG UND BETRIEBSSTOFFHEIZUNG**
METHOD FOR HEATING AN OPERATING AGENT, AS WELL AS A RESERVOIR HEATING SYSTEM AND AN OPERATING AGENT HEATING SYSTEM
PROCÉDÉ POUR RÉCHAUFFER UN CARBURANT AINSI QUE SYSTÈME DE CHAUFFAGE DE RÉSERVOIR ET SYSTÈME DE RÉCHAUFFAGE DE CARBURANT

(30) Priorität: 27.11.2014 DE 102014224284
(43) Veröffentlichungstag der Anmeldung: 19.07.2017
(73) Patentinhaber: Siemens Mobility GmbH, 81739 München (DE)
(72) Erfinder: HINTERMEIR, Stefan, 83229 Aschau I. Ch (DE)
(86) Internationale Anmeldenummer: PCT/EP2015/076922
(87) Internationale Veröffentlichungsnummer: WO 2016/083200

(56) Entgegenhaltungen:
- EP-A1- 1 662 103
- EP-A1- 1 731 882
- EP-A1- 1 757 781
- EP-A1- 2 175 111
- WO-A1-2010/110669
- WO-A2-2010/069924
- DE-A1-102011 015 196
- US-A1- 2010 242 439

## Beschreibung

Die Erfindung betrifft eine Vorratsbehälterheizung sowie eine Betriebsstoffheizung für ein Schienenfahrzeug, insbesondere zur Erwärmung eines Reduktionsmittels zur Abgasnachbehandlung. Des Weiteren betrifft die Erfindung einen Antrieb, insbesondere einen Dieselantrieb, für ein Schienen- oder Kraftfahrzeug, oder ein Schienen- oder Kraftfahrzeug. - Dieses Dokument beansprucht die Priorität der deutschen Patentanmeldung DE 10 2014 224 284 A1 (27. November 2014), deren Offenbarungsgehalt hiermit durch Rückbezug aufgenommen ist.

Die Abgasgrenzwerte für Fahrzeuge, insbesondere für Schienen- und Kraftfahrzeuge, werden kontinuierlich verschärft. Zum Teil werden die neusten Abgasgrenzwerte nur noch mit einer SCR-Anlage (Selective Catalytic Reduction, selektive katalytische Reduktion von Stickoxiden in Abgasen von Verbrennungsmotoren) erreicht, welche mit einer Harnstofflösung arbeitet, die auf dem Fahrzeug mitgeführt werden muss. Derzeitige Harnstofflösungen haben die Eigenschaft, dass sie je nach einem Harnstoffgehalt ab ca. -10°C einfrieren können. Ein ordnungsgemäßer Betrieb des Fahrzeugs ist dann nicht mehr möglich bzw. die Abgasgrenzwerte können bei eingefrorener Harnstofflösung nicht mehr eingehalten werden. Eine gefrorene Harnstofflösung ist nicht zerstört und kann nach einem Auftauvorgang wieder verwendet werden.

Aus diesem Grund kann es notwendig sein, ein Heiz- bzw. Wärmkonzept in einen Vorratsbehälter für die Harnstofflösung zu integrieren. Dabei muss sowohl auf unterschiedliche Betriebszustände des Fahrzeugs eingegangen werden, als auch auf unterschiedliche Umgebungstemperaturen. Des Weiteren ist zu beachten, dass Harnstofflösungen eine bestimmte Maximaltemperatur von ca. +60°C nicht überschreiten dürfen. Das bedeutet, dass das Wärmkonzept eine Temperatursteuerung oder -regelung benötigt, damit sowohl eine Minimaltemperatur als auch eine Maximaltemperatur der Harnstofflösung nicht unter- bzw. überschritten werden.

Insbesondere bei einem Schienenfahrzeug, beispielsweise bei einer Diesellokomotive, führt das zu folgendem Problem. Wenn der Verbrennungsmotor des Schienenfahrzeugs läuft, ist das Bordnetz des Schienenfahrzeugs vollständig aktiviert und sämtliche Steuerungs-, Regelungs- und/oder Überwachungsschaltungen des Schienenfahrzeugs sind aktiv. In diesem Betriebszustand kann eine Erwärmung eines Harnstoffbehälters des Schienenfahrzeugs überwacht werden. Möchte man jedoch auch in einem Vorwärmbetrieb den Harnstoffbehälter mit Wärme versorgen, ist eine Temperatursteuerung oder -regelung über eine Bordelektronik nicht möglich, weil das Bordnetz und sämtliche Steuerungs-, Regelungs- und/oder Überwachungsschaltungen im Vorwärmbetrieb des Schienenfahrzeugs ausgeschaltet sind.

Bekannt sind SCR-Abgasanalgen bei Lastkraftwagen. Auch bei einem Lastkraftwagen wird ein Vorratsbehälter einer Harnstofflösung (meist AdBlue®) mittels einer Kühlflüssigkeit des Lastkraftwagens gewärmt, welche jedoch, analog zu oben, nur in einem Betrieb des Lastkraftwagens aktiv ist. Da bei einem Lastkraftwagen eine Vorratsmenge an Harnstofflösung wesentlich geringer als bei einem vergleichsweise großen Schienenfahrzeug ist, kann für den Fall, dass die Harnstofflösung gefroren ist, die Harnstofflösung schnell wieder aufgetaut werden.

Die DE 199 35 920 A1 offenbart eine Vorrichtung und ein Verfahren zum Beheizen eines Vorratsbehälters für Harnstofflösung einer Abgasnachbehandlungsanlage eines Verbrennungsmotors für ein Nutzfahrzeug. Die im Vorratsbehälter gespeicherte Harnstofflösung ist durch eine Abwärme des Verbrennungsmotors beheizbar, wobei eine Kühlflüssigkeit des Verbrennungsmotors durch Heizrohre im Vorratsbehälter hindurchgeführt wird. Hierbei ist die Harnstofflösung im Vorratsbehälter in Bezug auf eine Größe des Vorratsbehälters vergleichsweise großvolumig auftaubar. Für eine Begrenzung einer Temperatur der Harnstofflösung sind ein Wärmetauscher und Thermostatventile vorgesehen.

Die EP 2 226 479 A1 lehrt eine elektrische Heizeinrichtung mit einer Mehrzahl von Heizelementen für einen Vorratsbehälter einer Harnstofflösung für eine Abgasnachbehandlungsanlage eines Verbrennungsmotors eines Kraftfahrzeugs sowie ein Verfahren zum Aufschmelzen einer im Vorratsbehälter gefrorenen Harnstofflösung. Um ein Volumen der Harnstofflösung aufzuschmelzen ist vorgesehen, dass die Heizeinrichtung eine Steuereinheit aufweist, durch welche elektrische Heizelemente einzeln oder in Gruppen zum Aufschmelzen des Volumens nacheinander betreibbar sind.

Die EP 1 731 882 A1, die EP 1 757 781 A1, die WO 2010-069924 A2 und die WO 2010-110669 A1 lehren jeweils eine Vorratsbehälterheizung für ein Kraftfahrzeug zur Erwärmung eines Reduktionsmittels für eine Abgasnachbehandlung. Die jeweilige Vorratsbehälterheizung umfasst einen Vorratsbehälter für ein Reduktionsmittel und eine Heizeinrichtung im Vorratsbehälter zur Erwärmung des Reduktionsmittels. Die jeweilige Heizeinrichtung weist wenigstens zwei in einem rechten Winkel angeordnete Abschnitte auf, wobei die Abschnitte derart in der Heizeinrichtung eingerichtet sind, dass sie von einer Kühlflüssigkeit des Kraftfahrzeugs lediglich in Reihe durchströmbar sind.

Bei einem größeren Verbrennungsmotor, der sich in einer Größenordnung zwischen einem Verbrennungsmotor für einen Lastkraftwagen und einem Verbrennungsmotor für ein Schienenfahrzeug befindet, wird ähnliches Vorgehen angewandt. Sobald der Verbrennungsmotor eingeschaltet ist, übernimmt ein verbrennungsmotorinternes Steuer- oder Regelsystem eine Kühlwasserzufuhr in den Vorratsbehälter der Harnstofflösung. Sollte die Temperatur der Harnstofflösung einen Schwellenwert unterschreiten, dann öffnet dieses Ventil und Kühlflüssigkeit aus dem Verbrennungsmotor strömt durch den Vorratsbehälter zum Erwärmen der Harnstofflösung. Bei Erreichen einer oberen Schwellentemperatur schließt dieses Ventil wieder.

Die DE 10 2008 011 329 A1 offenbart ein Schienenfahrzeug mit einem Verbrennungsmotor und einer mit dem Verbrennungsmotor verbundenen SCR-Abgasanlage. Die SCR-Abgasanlage umfasst eine Zufuhreinrichtung für eine Harnstofflösung, welche dazu ausgebildet ist, einem Abgasstrom des Verbrennungsmotors die Harnstofflösung zuzuführen. Hierfür weist die Zufuhreinrichtung einen Vorratsbehälter für die Harnstofflösung auf. Die Zufuhreinrichtung kann ferner eine Temperiereinrichtung zum Kühlen und/oder Heizen der Harnstofflösung umfassen. Zum Heizen der Harnstofflösung kann die Temperiereinrichtung eine elektrisch betriebene und/oder eine von einem Kühlmittelkreislauf des Verbrennungsmotors gespeiste Heizleitung umfassen.

Für Verbrennungsmotoren von Diesellokomotiven existiert ferner folgendes Konzept. In einen Ansaugbereich einer Harnstofflösung wird ein vergleichsweise kleines kühlwasserbeheiztes Element eingesetzt. Dieses Element ist jedoch derart im Kühlwasserkreislauf verschaltet, dass es bei einer Vorwärmung nicht durchflossen wird und somit die Harnstofflösung auch nicht erwärmt. Ist die Harnstofflösung großflächig im Vorratsbehälter gefroren, dann benötigt dieses kühlwasserbeheizte Element bei eingeschaltetem Verbrennungsmotor eine vergleichsweise lange Zeit bis die gefrorene Harnstofflösung vollständig flüssig wird. Aus diesem Grund wird bei diesem Konzept eine zusätzliche elektrische Heizmatte in den Vorratsbehälter integriert, die jedoch nur bei eingeschaltetem Verbrennungsmotor ein Auftauen der Harnstofflösung unterstützt.

Die DE 10 2011 015 196 A1 lehrt einen Fahrzeugantrieb eines Schienenfahrzeugs, mit einer Heizung zum Erwärmen eines Reduktionsmittels in einem Reduktionsmittelbehälter. Der Fahrzeugantrieb umfasst einen Verbrennungsmotor, wobei in einem Betriebsmodus des Verbrennungsmotors in dessen Kühlkreis ein Kühlmittel mittels einer ersten, vom Verbrennungsmotor antreibbaren Kühlmittelpumpe zirkulierbar ist. Ferner umfasst der Fahrzeugantrieb ein erstes Erwärmungsleitungssystem mit einer zweiten Kühlmittelpumpe, mittels welcher das Kühlmittel durch einen Wärmetauscher im Reduktionsmittelbehälter hindurchpumpbar ist. Damit das Reduktionsmittel und der Verbrennungsmotor auch dann erwärmbar sind, wenn der Verbrennungsmotor abgeschaltet ist, umfasst der Fahrzeugantrieb ein zweites Erwärmungsleitungssystem mit einer Heizeinrichtung und einer dritten Kühlmittelpumpe, mittels welcher das Kühlmittel durch den Wärmetauscher im Reduktionsmittelbehälter und den Verbrennungsmotor hindurchpumpbar ist.

Es ist eine Aufgabe der Erfindung, ein verbessertes Verfahren zum Erwärmen eines Betriebsstoffs für ein Schienenfahrzeug, insbesondere zum Erwärmen eines Reduktionsmittels zur Abgasnachbehandlung, sowie eine Betriebsstoffheizung für ein Schienenfahrzeug, insbesondere zur Erwärmung eines Reduktionsmittels zur Abgasnachbehandlung, anzugeben. Hierbei soll dem Schienenfahrzeug, abgesehen von einer Notsituation, der Betriebsstoff immer in einem ausreichendem Maß, also auch bei einem Start bei Außentemperaturen unter ca. -10°, zu Verfügung stehen. Es ist ferner eine Aufgabe der Erfindung, einen Antrieb, insbesondere Dieselantrieb, für ein Schienen- oder Kraftfahrzeug, und ein Schienen- oder Kraftfahrzeug zur Verfügung zu stellen.

Die Aufgabe der Erfindung ist mittels einer Vorratsbehälterheizung für ein Schienenfahrzeug, insbesondere zur Erwärmung eines Reduktionsmittels zur Abgasnachbehandlung; und mittels eines Antriebs, insbesondere eines Dieselantriebs, für ein Schienen- oder Kraftfahrzeug, oder ein Schienen- oder Kraftfahrzeug, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und/oder der folgenden Beschreibung der Erfindung.

Bei einem Verfahren zum Erwärmen eines Betriebsstoffs für ein Schienenfahrzeug, insbesondere zum Erwärmen eines Reduktionsmittels zur Abgasnachbehandlung, wird in einem Betriebsmodus einer Betriebsstoffheizung mittels einer Pumpe eine Kühlflüssigkeit durch einen Kühlkreis des Verbrennungsmotors hindurchgepumpt, wobei ferner im Betriebsmodus mittels dieser Pumpe die Kühlflüssigkeit durch einen Hauptwärmkreis zum Erwärmen des Betriebsstoffs in einem Vorratsbehälter hindurchgepumpt werden kann. Für einen Vorwärmmodus der Betriebsstoffheizung kann der Hauptwärmkreis des Betriebsstoffs vom Kühlkreis des Verbrennungsmotors im Wesentlichen fluidmechanisch entkoppelt werden, wobei der Kühlkreis als ein erster Teilkreis eines Vorwärmkreises und der entkoppelte Hauptwärmkreis als ein Abschnitt eines zweiten Teilkreises des Vorwärmkreises fungieren.

Gemäß dem Verfahren kann die bevorzugt mittels eines Vorwärmgeräts im Vorwärmkreis gewärmte Kühlflüssigkeit von einer Pumpe im Vorwärmkreis oder einer Pumpe des Vorwärmgeräts durch den Vorwärmkreis hindurchgepumpt werden. Im Vorwärmmodus kann die Kühlflüssigkeit im Kühlkreis des Verbrennungsmotors bzw. im ersten Teilkreis des Vorwärmkreises im Wesentlichen parallel strömen, und/oder die Kühlflüssigkeit kann im zweiten Teilkreis des Vorwärmkreises zirkulieren.

Die erfindungsgemäße Vorratsbehälterheizung umfasst einem Vorratsbehälter für einen Betriebsstoff, eine Ansaugöffnung im Vorratsbehälter zum Ansaugen des Betriebsstoffs und eine Heizeinrichtung im Vorratsbehälter zur Erwärmung des Betriebsstoffs, wobei die Heizeinrichtung zwei Abschnitte aufweist, und gegenüber einem Boden des Vorratsbehälters ein erster Abschnitt der Heizeinrichtung im Wesentlichen senkrecht und ein zweiter Abschnitt der Heizeinrichtung im Wesentlichen parallel angeordnet sind, und die beiden Abschnitte der mit einer Kühlflüssigkeit des Schienenfahrzeugs durchströmbaren Heizeinrichtung fluidmechanisch parallel ausgebildet sind.

Der erste Abschnitt der Heizeinrichtung kann sich bis an oder über einen maximalen Füllstand des Betriebsstoffs erstrecken. Der zweite Abschnitt der Heizeinrichtung kann bodennah im Vorratsbehälter untergebracht sein, wobei bevorzugt ein Spalt zwischen dem zweiten Abschnitt der Heizeinrichtung und dem Boden vorgesehen ist. Gemäß der Erfindung kann der Betriebsstoff ein Reduktionsmittel, bevorzugt eine Harnstofflösung zur Abgasnachbehandlung sein. Ferner kann ein Ansaugstutzen im Vorratsbehälter oder der Vorratsbehälter die Ansaugöffnung aufweisen. Des Weiteren kann die Ansaugöffnung in einem Bereich des Vorratsbehälters vorgesehen sein, welcher an beide Abschnitte der Heizeinrichtung angrenzt. Der erste Abschnitt der Heizeinrichtung kann im Wesentlichen stab- und zylinderförmig und/oder der zweite Abschnitt der Heizeinrichtung kann im Wesentichen kissen- oder quaderförmig ausgebildet sein. Die beiden Abschnitte können eine einzige Heizeinrichtung konstituieren, oder zwei voneinander separate Abschnitte können eine Heizeinrichtungsanordnung ausbilden.

Die erfindungsgemäße Betriebsstoffheizung für ein Schienenfahrzeug, insbesondere zur Erwärmung eines Reduktionsmittels zur Abgasnachbehandlung, umfasst einen Kühlkreis für einen Verbrennungsmotor und einen an den Kühlkreis angeschlossenen Hauptwärmkreis zum Erwärmen eines Betriebsstoffs in einem Vorratsbehälter, wobei eine durch den Hauptwärmkreis zirkulierbare Kühlflüssigkeit mittels einer Pumpe des Kühlkreises in einem Betriebsmodus der Betriebsstoffheizung durch den Hauptwärmkreis pumpbar ist, und der Hauptwärmkreis unter einer Umgehung seiner Zuflussleitung mittels einer Vorwärmleitung überbrückbar ist, wobei die Betriebsstoffheizung eine erfindungsgemäße Vorratsbehälterheizung aufweist. Der Hauptwärmkreis kann mittels einer Zuflussleitung stromabwärts der Pumpe und mittels einer Abflussleitung stromaufwärts der Pumpe an den Kühlkreis angeschlossen sein. Ferner kann der Hauptwärmkreis, insbesondere die Zuflussleitung, ein Ventil aufweisen, mittels welchem anhand einer Temperatur des Betriebsstoffs ein Kühlflüssigkeitsstrom durch den Hauptwärmkreis hindurch einstellbar ist.

Gemäß der Erfindung kann der Hauptwärmkreis im Vorratsbehälter wenigstens eine Heizeinrichtung aufweisen, mittels welcher eine Säule und ggf. ein bodennahes Kissen des Betriebsstoffs erwärmbar bzw. auftaubar ist. Ein Ansaugbereich des Betriebsstoffs im Vorratsbehälter bzw. eine Ansaugöffnung kann mittels einer Zusatzheizeinrichtung erwärmbar bzw. auftaubar sein. Die Vorwärmleitung ist einerseits bevorzugt stromabwärts der Heizeinrichtung an den Hauptwärmkreis und andererseits an den Kühlkreis bevorzugt stromaufwärts der Zylinder angeschlossen.

In Ausführungsformen der Erfindung kann an/in der Vorwärmleitung stromabwärts der Heizeinrichtung ein Vorwärmgerät und stromabwärts des Vorwärmgeräts ein Rückschlagventil vorgesehen sein. Des Weiteren kann an die Vorwärmleitung stromabwärts des Vorwärmgeräts und stromaufwärts des Rückschlagventils eine Zwischenleitung angeschlossen sein, welche ferner an den Hauptwärmkreis angeschlossen ist. Darüber hinaus sind der Kühlkreis und der Hauptwärmkreis mittels der Vorwärmleitung und der Zwischenleitung in einen Vorwärmkreis überführbar, mittels welchem der Verbrennungsmotor und/oder der Betriebsstoff im Vorratsbehälter vorwärmbar ist bzw. sind.

Gemäß der Erfindung kann der Vorwärmkreis zwei Teilkreise aufweisen, wobei in einem Vorwärmmodus der Betriebsstoffheizung die Kühlflüssigkeit durch die zwei Teilkreise strömbar ist. In einem ersten Teilkreis des Vorwärmkreises ist der Kühlkreis von der Kühlflüssigkeit im Wesentlichen parallel durchströmbar. In einem zweiten Teilkreis des Vorwärmkreises ist die Kühlflüssigkeit im Wesentlichen vollständig zirkulierbar. Im Vorwärmmodus ist die Kühlflüssigkeit von einer Pumpe in der Vorwärmleitung und/oder einer Pumpe des Vorwärmgeräts durch die zwei Teilkreise hindurchpumpbar.

Die erfindungsgemäße Betriebsstoffheizung kann derart ausgebildet sein, dass bei einem Wechsel vom Vorwärmmodus in den Betriebsmodus und umgekehrt, keine Umkehr einer Zirkulationsrichtung durch Leitungen des Hauptwärmkreises erfolgt. Gemäß der Erfindung kann die Pumpe als eine verbrennungsmotorbetriebene oder eine elektrisch betriebene Pumpe ausgebildet sein. Ferner kann das Ventil als ein motorgesteuertes Ventil ausgebildet sein. Das Ventil kann stromaufwärts der Heizeinrichtung im Hauptwärmkreis, insbesondere an/in der Zuflussleitung vorgesehen sein. Des Weiteren kann das Vorwärmgerät als ein kraftstoffbetriebenes oder ein elektrisches Vorwärmgerät ausgebildet sein. Darüber hinaus kann an/in der Zwischenleitung stromaufwärts der Heizeinrichtung ein Rückschlagventil vorgesehen sein. Im Vorwärmmodus ist der Verbrennungsmotor und/oder die Pumpe bevorzugt inaktiv und/oder in der Vorwärmleitung kann eine Pumpe stromaufwärts oder stromabwärts des Vorwärmgeräts vorgesehen sein. Durch die Betriebsstoffheizung ist das eingangs genannte Verfahren zum Erwärmen eines Betriebsstoffs durchführbar.

Die Erfindung ist im Folgenden anhand von Ausführungsbeispielen einer Ausführungsform einer Variante unter Bezugnahme auf die beigefügte schematische Zeichnung näher erläutert. Elemente, Bauteile oder Komponenten, welche eine identische, univoke oder analoge Ausbildung und/oder Funktion besitzen, sind in der Figurenbeschreibung, der Bezugszeichenliste und den Patentansprüchen mit denselben Bezugszeichen versehen und/oder in der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen, Kombinationen etc. zu der dargestellten Ausführungsform und/oder den erläuterten Ausführungsbeispielen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung, der Figurenbeschreibung und/oder der Bezugszeichenliste, ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (FIG) der Zeichnung zeigen:
- FIG 1: eine schematische Ansicht eines Fahrzeugantriebs für ein Schienenfahrzeug mit einer erfindungsgemäßen Betriebsstoffheizung bei einem Stillstand des Schienenfahrzeugs;
- FIG 2: eine schematische Ansicht des erfindungsgemäßen Fahrzeugantriebs aus der FIG 1, wobei ein Betriebsmodus und ein Notstartmodus des Schienenfahrzeugs dargestellt sind;
- FIG 3: eine schematische Ansicht des erfindungsgemäßen Fahrzeugantriebs aus der FIG 1, wobei ein Vorwärmmodus eines Verbrennungsmotors und eines Vorratsbehälters des Schienenfahrzeugs dargestellt sind; und
- FIG 4: eine Schemadarstellung eines aufgeschnittenen Vorratsbehälters zur Verdeutlichung einer Position einer Ansaugöffnung zum Ansaugen eines Betriebsstoffs innerhalb des Vorratsbehälters relativ zu einer Heizeinrichtung.

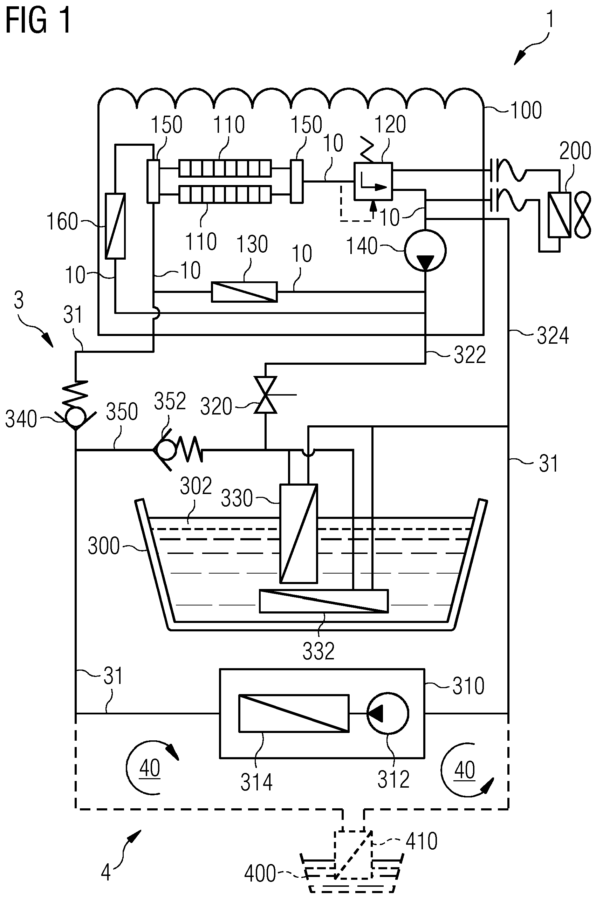

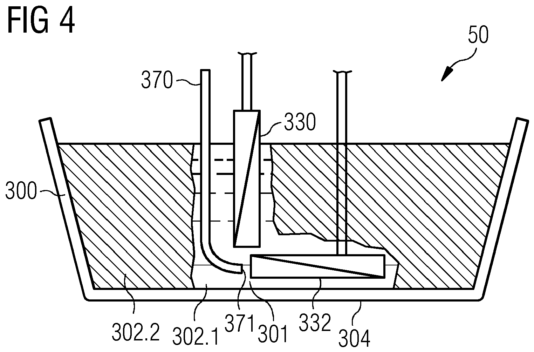

Die Erfindung ist im Folgenden anhand von Ausführungsbeispielen einer Variante (vgl. die FIG 1 bis 4) eines Verfahrens zum Erwärmen eines Betriebsstoffs 302, einer erfindungsgemäßen Betriebsstoffheizung 3 (FIG 1 bis 4) und einer erfindungsgemäßen Vorratsbehälterheizung 50 (FIG 4) für einen Fahrzeugantrieb 1 eines Schienenfahrzeugs näher erläutert. Die Erfindung ist jedoch nicht auf eine solche Variante und/oder die nachfolgend erläuterte Ausführungsform beschränkt, sondern ist von grundlegenderer Natur, sodass sie auf sämtliche Antriebe 1 im Sinne der Erfindung, z. B. auch auf Kraftfahrzeuge, angewendet werden kann. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

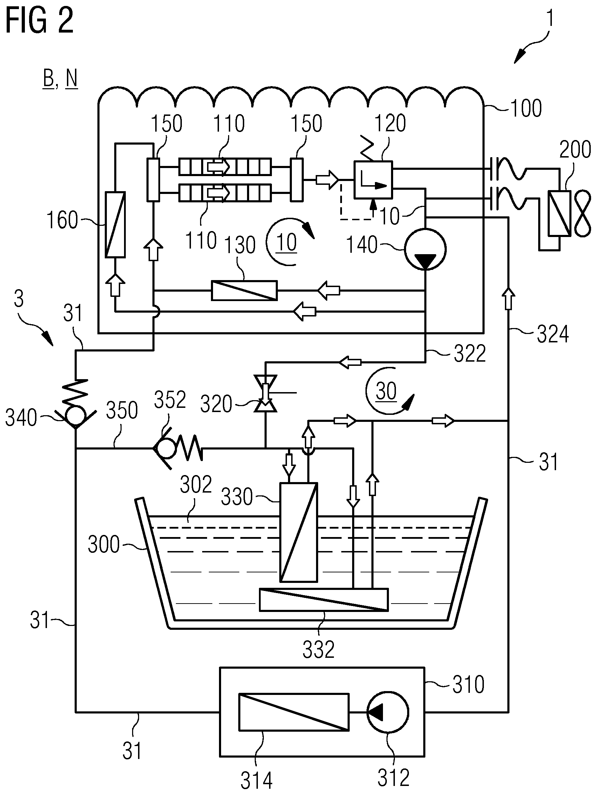

Die FIG 2 zeigt einen bekannten aktiven bzw. eingerichteten Kühlkreis 10 (Pfeile) eines Verbrennungsmotors 100, insbesondere eines Dieselmotors 100, des Fahrzeugantriebs 1 des Schienenfahrzeugs, mit z. B. den standardmäßigen Komponenten einer Mehrzahl von zu kühlenden Zylindern 110, einem Thermostat 120, einem Ölkühler 130, einer Motorpumpe 140, Sammelkästen 150, einem Ladeluftkühler 160 etc. Die Fluidleitungen bzw. ein Leitungssystem für eine Kühlflüssigkeit des Kühlkreises 10, bevorzugt ein Wasser-Glykol-Gemisch, führt dabei durch den Verbrennungsmotor 100 hindurch und an dessen Zylindern 110 vorbei. Zudem zeigen die FIG 1, welche die Betriebsstoffheizung 3 in einem stillgelegten Zustand zeigt, und die FIG 2 einen externen Kühler 200, durch welchen die Kühlflüssigkeit insbesondere in einem betriebswarmen Zustand des Verbrennungsmotors 100 bzw. des Fahrzeugantriebs 1 hindurchleitbar ist, damit diese ihre im Verbrennungsmotor 100 aufgenommene Wärme z. B. an die Umgebung abgeben kann.

Ferner zeigt die FIG 2 einen aktiven bzw. eingerichteten Hauptwärmkreis 30 (Pfeile) der Betriebsstoffheizung 3 für einen Vorratsbehälter 300 eines Betriebsstoffs 302, insbesondere eines Reduktionsmittels 302 für ein Abgasnachbehandlungssystem, des Schienenfahrzeugs. Bevorzugt ist das Reduktionsmittel 302 eine Harnstofflösung 302. Die Fluidleitungen bzw. ein Leitungssystem des Hauptwärmkreises 30 ist dabei bevorzugt an den Kühlkreis 10 angeschlossen (Zu- 322 und Abflussleitung 324) und kann mit diesem in eine bevorzugt direkte fluidmechanische Verbindung gebracht werden. D. h. durch den Hauptwärmkreis 30 kann, wenn es die Bedingungen im Vorratsbehälter 300 erfordern, die Kühlflüssigkeit als ein Wärmmedium für den Betriebsstoff 302 im Vorratsbehälter 300 hindurchströmen. D. h. durch den Hauptwärmkreis 30 kann eine Abwärme des Verbrennungsmotors 100 für ein Erwärmen des Betriebsstoffs 302 verwendet werden.

Der Hauptwärmkreis 30 für den Vorratsbehälter 300 weist, neben den Fluidleitungen, z. B. den bevorzugt wärmeisolierten Vorratsbehälter 300 für den Betriebsstoff 302, insbesondere die Harnstofflösung 302, ein bevorzugt motorgesteuertes Ventil 320, eine bevorzugt als Multifunktionseinheit 330 ausgebildete Heizeinrichtung 330 und ggf. eine (Zusatz-)Heizeinrichtung 332 im Vorratsbehälter 300 auf. - Im Bedarfsfall kann dieses Schema mit einem Zusatzheizkreis 40 einer Zusatzheizung 4 für ein weiteres Fluid bzw. einen weiteren Betriebsstoff, z. B. einen Kraftstoff, für das Schienenfahrzeug erweitert werden (vgl. FIG 1). D. h. der Zusatzheizkreis 40 kann an den Hauptwärmkreis 30 und/oder einen Vorwärmkreis 32; 32.1, 32.2 (siehe unten) angeschlossen werden, welcher z. B. mittels manuell oder automatisiert betätigbaren Hähnen oder Ventilen fluidmechanisch mit diesem bzw. diesen verbindbar ist. Natürlich können auch mehrere Zusatzheizkreise 40 vorgesehen sein.

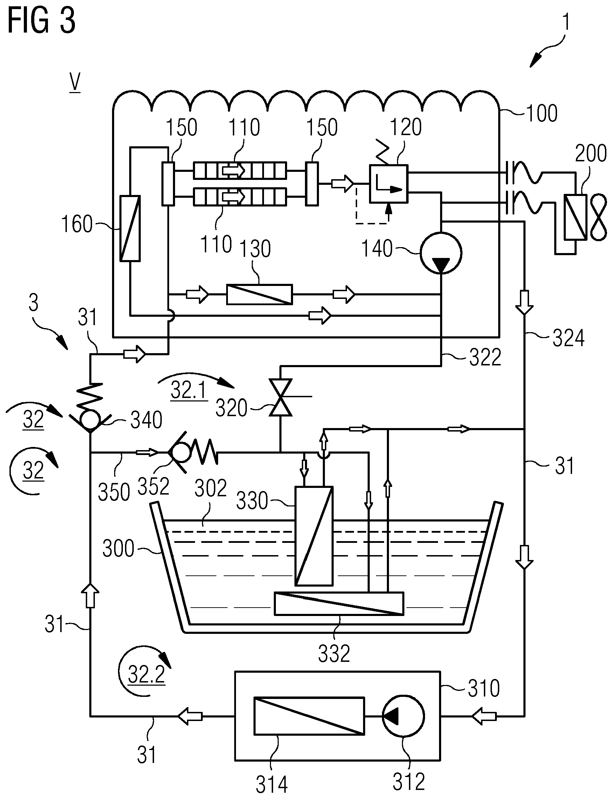

Die FIG 3 zeigt einen aktiven bzw. eingerichteten Vorwärmkreis 32 (Pfeile) der Betriebsstoffheizung 3 für den Vorratsbehälter 300 bzw. den Betriebsstoff 302. Die Fluidleitung(en) bzw. ein Leitungssystem, im Folgenden als Vorwärmleitung 31 bezeichnet, für eine Realisierung des Vorwärmkreises 32 ist bevorzugt stromabwärts der Heizeinrichtung 330, 332 an den Hauptwärmkreis 30 angeschlossen und führt über ein Vorwärmgerät 310 (Pumpe 312 und Heizelement 314 des Vorwärmgeräts 310), ein Rückschlagventil 340 zum Kühlkreis 10, wo die Vorwärmleitung 31, bevorzugt stromabwärts des Ölkühlers 130 angeschlossen ist.

Der Vorwärmkreis 32 kann mit Leitungen des Hauptwärmkreises 30 und dem Kühlkreis 10 in eine bevorzugt direkte fluidmechanische Verbindung gebracht werden, wobei der Vorwärmkreis 32 den Hauptwärmkreis 30 und den Kühlkreis 10 derart unter Umgehung einer Zuflussleitung 322 für den Hauptwärmkreis 30 aufteilt, dass dieser durch den Verbrennungsmotor 100 (erster Teilkreis 32.1) und/oder den Vorratsbehälter 300 hindurchführt (zweiter Teilkreis 32.2). Hierbei überbrückt der Vorwärmkreis 32 die Zuflussleitung 322 mit dem daran oder darin befindlichen Ventil 320, sodass das Ventil 320 wirkungslos ist. Der Zufluss der Kühlflüssigkeit zu dem oder den Heizelementen 330, 332 erfolgt ausgehend stromabwärts des oder der Heizelemente 330, 332 über die Vorwärmleitung 31 (Vorwärmgerät 310) und ein Rückschlagventil 352 an oder in einer Zwischenleitung 350.

Damit auch der Vorratsbehälter 300 bzw. die Heizeinrichtung(en) 330, 332 mit Kühlflüssigkeit durchströmt werden, ist an die Vorwärmleitung 31 die Zwischenleitung 350 angeschlossen, die eine Fluidkommunikation zwischen der Vorwärmleitung 31 und der oder den Heizeinrichtung(en) 330, 332 ermöglicht. Stromabwärts dieses Anschlusses weist die Vorwärmleitung 31 des in die Fließrichtung des zweiten Teilkreises 32.2 öffnende Rückschlagventil 340 auf, welches schon zum ersten Teilkreis 32.1 gerechnet werden kann.

Ferner weist die Zwischenleitung 350 bevorzugt stromabwärts ihres Anschlusses an die Vorwärmleitung 31 ebenfalls das in die Fließrichtung des zweiten Teilkreises 32.2 öffnende Rückschlagventil 352 auf. D. h. die Zwischenleitung 350 verbindet den Vorwärmkreis 32 des Verbrennungsmotors 100 mit dem Hauptwärmkreis 30 des Vorratsbehälters 300 unter Überbrückung der Zuflussleitung 322. Durch den Vorwärmkreis 32 kann, wenn es die Bedingungen im Verbrennungsmotor 100 und/oder im Vorratsbehälter 300 erfordern, die Kühlflüssigkeit als ein Wärmmedium für den Verbrennungsmotor 100 und/oder den Betriebsstoff 302 im Vorratsbehälter 300 dienen.

Mittels des Vorwärmkreises 32 wird eine nicht durch den Verbrennungsmotor 100 erzeugte Wärme zum Erwärmen des Verbrennungsmotors 100 und/oder des Betriebsstoffs 302 verwendet (Vorwärmgerät 310 in der Vorwärmleitung 31). In Ausführungsformen kann lediglich der Verbrennungsmotor 100 oder lediglich der Betriebsstoff 302 durch den Vorwärmkreis 32 erwärmt werden, was einerseits von einer Stärke der Rückschlagventile 340, 352 und andererseits von einem Fluiddruck in der Vorwärmleitung 31 am Anschluss der Zwischenleitung 350 abhängt. Hierbei ist der jeweilig andere Teilkreis 32.1/32.2 des Vorwärmkreises 32 inaktiv. Es ist natürlich, wie in der FIG 3 dargestellt, möglich, dass sowohl der Verbrennungsmotor 100 als auch der Betriebsstoff 302 durch den Vorwärmkreis 32 erwärmt werden, wobei beide Teilkreise 32.1, 32.2 des Vorwärmkreises 32 aktiv (Pfeile) sind. Im ersten Teilkreis 32.1 erfolgt bevorzugt ein im Wesentlichen paralleles Durchströmen des Verbrennungsmotors 100.

Der zweite Teilkreis 32.2 kann als ein Auftaukreis der Betriebsstoffheizung 3 für den Vorratsbehälter 300 bzw. den Betriebsstoff 302 dienen, falls der Betriebsstoff 302 im Vorratsbehälter 300 eingefroren ist. Hierbei wird ebenfalls eine nicht durch den Verbrennungsmotor 100 erzeugte Wärme zum Auftauen und Erwärmen des Betriebsstoffs 302 verwendet (Vorwärmgerät 310). - Die in den FIG 1 bis 3 abgebildeten Schemata decken die folgenden Betriebsfälle des Schienenfahrzeugs, des Fahrzeugantriebs 1 bzw. des Verbrennungsmotors 100 ab: Stillstand (FIG 1), laufender Verbrennungsmotor 100 bzw. laufender Fahrzeugantrieb 1, bzw. Notstart (Einschalten des ggf. kalten Verbrennungsmotors 100) des Schienenfahrzeugs (Betriebsmodus B, Notstartmodus N, FIG 2), und ein Vorwärmbetrieb des Verbrennungsmotors bzw. des Fahrzeugantriebs 1 und/oder des Vorratsbehälters 300 (Vorwärmmodus V, FIG 3).

Der in FIG 2 dargestellte Betriebsmodus B ist lediglich aktiv bei laufendem bzw. ausreichend warmen oder betriebswarmen Verbrennungsmotor 100, wobei die Motorpumpe 140 aktiv ist. Hierbei zirkuliert die Kühlflüssigkeit einerseits im Verbrennungsmotor 100 durch die Zylinder 110, den Sammelkasten 150, das Thermostat 120, den Kühler 200, die Motorpumpe 140 den Ölkühler 130, den Ladeluftkühler 160 und den Sammelkasten 150 (bevorzugt in dieser Reihenfolge), also im Kühlkreis 10. Es strömt keine Kühlflüssigkeit in das Vorwärmgerät 310, weil dabei die Rückschlagventile 340, 352 geschlossen gehalten sind. Eine Steuerung und/oder Regelung des Schienenfahrzeugs ist aktiviert und das motorgesteuerte Ventil 320 steuert oder regelt die Temperatur des Betriebsstoffs 302 im Vorratsbehälter 300 und verhindert ein Überhitzen des Betriebsstoffs 302.

Zum Erwärmen des Betriebsstoffs 302 strömt die Kühlflüssigkeit in diesem Betriebsfall im Hauptwärmkreis 30 von der Motorpumpe 140 über das motorgesteuerte Ventil 320, die bevorzugt als Multifunktionseinheit 330 ausgebildete Heizeinrichtung 330 und bevorzugt die bodennahe (Zusatz-)Heizeinrichtung 332 zurück an die Motorpumpe 140. Hierbei ist der Hauptwärmkreis 30 bevorzugt stromabwärts und stromaufwärts der Motorpumpe 140 an den Kühlkreis 10 fluidmechanisch angeschlossen. - Sollte die Temperatur des Betriebsstoffs 302 im Vorratsbehälter 300 unter einen Schwellenwert sinken, so wird dies von einer Steuerung oder Regelung des Verbrennungsmotors 100 diagnostiziert und das motorgesteuerte Ventil 320 öffnet bevorzugt intervallweise. Sollte sich die Temperatur des Betriebsstoffs 302 oberhalb des Schwellenwerts befinden, bleibt das motorgesteuerte Ventil 320 bevorzugt ständig geschlossen. Eine Regulierung der Temperatur im Vorratsbehälter 300 wird von der Steuerung und/oder Regelung des Schienenfahrzeugs bzw. des Verbrennungsmotors 100 übernommen.

Im in der FIG 3 dargestellten Vorwärmmodus V läuft nur eine Pumpe 312 des Vorwärmgeräts 310. Der Verbrennungsmotor 100 und dessen Motorpumpe 140 sind im Vorwärmmodus V abgeschaltet. Die Basis für diesen Betriebszustand ist, dass eine Temperatur der Kühlflüssigkeit unterhalb einer Startschwelle für den Verbrennungsmotor 100 liegt. In diesem Betriebszustand strömt die Kühlflüssigkeit bevorzugt sowohl durch den Verbrennungsmotor 100 als auch den Vorratsbehälter 300 bzw. den darin befindlichen Betriebsstoff 302. Der Betriebsstoff 302 im Vorratsbehälter 300 wird bevorzugt immer geheizt, wenn der Vorwärmmodus V aktiv ist. Ein Hauptvolumenstrom (vergleichsweise dicke Pfeile) der Kühlflüssigkeit wird zur Vorwärmung des Verbrennungsmotors 100 genutzt. Die Vorwärmung des Verbrennungsmotors 100 hat Priorität gegenüber einer Erwärmung des Betriebsstoffs 302.

Während des Betriebszustands Vorwärmmodus V sind nahezu sämtliche Steuerungs-, Regelung- und Überwachungsschaltungen des Schienenfahrzeugs abgeschaltet. Somit kann das motorgesteuerte Ventil 320 eine Steuerung oder Regelung der Temperatur des Betriebsstoffs 302 nicht übernehmen, es bleibt geschlossen. Ein Überhitzen des Betriebsstoffs 302 ist dennoch nicht möglich, weil das Vorwärmgerät 310 eine interne Temperatursteuerung oder -regelung besitzt, welche die Temperatur der Kühlflüssigkeit zwischen den Temperaturschwellen für einen Start des Verbrennungsmotors 100 steuert oder einregelt.

Die obere Temperaturschwelle für den Start des Verbrennungsmotors 100 ist unterhalb der Temperatur, ab welcher der Betriebsstoff 302 Schaden nehmen würde. Ein Einfrieren des Betriebsstoffs 302 ist ebenfalls ausgeschlossen, weil bei niedrigen Außentemperaturen der Verbrennungsmotor 100 ebenfalls auskühlt und somit die Temperatur der Kühlflüssigkeit unter die Starttemperatur des Verbrennungsmotors 100 fällt, was ein automatisches Einschalten des Vorwärmgeräts 310 nach sich zieht.

Zum Erwärmen des Verbrennungsmotors 100 strömt die Kühlflüssigkeit von der Pumpe 312 des Vorwärmgeräts 310 durch das Heizelement 314 des Vorwärmgeräts 310, das Rückschlagventil 340 und den Verbrennungsmotor 100 zurück zur Pumpe 312 des Vorwärmgeräts 310 (erster Teilkreis 32.1 des Vorwärmkreises 32; 32.1, 32.2). Zum Erwärmen des Betriebsstoffs 302 strömt die Kühlflüssigkeit von der Pumpe 312 des Vorwärmgeräts 310 durch das Heizelement 314 des Vorwärmgeräts 310, die Zwischenleitung 350, das Rückschlagventil 352, die Heizeinrichtung 330 und ggf. durch die (Zusatz-)Heizeinrichtung 332 zurück zur Pumpe 312 des Vorwärmgeräts 310 (zweiter Teilkreis 32.2 des Vorwärmkreises 32; 32.1, 32.2).

Sollte das Schienenfahrzeug für längere Zeit in einer Umgebung mit niedrigen Temperaturen abgestellt werden, kann der Betriebsstoff 302 im Vorratsbehälter 300 teilweise oder vollständig einfrieren. Ist der Betriebsstoff 302 z. B. eine Harnstofflösung 302, so ist diese in einem solchen Fall nicht beschädigt und muss für die Inbetriebnahme des Schienenfahrzeugs lediglich aufgetaut werden. Da in einer solchen Situation auch der Verbrennungsmotor 100 ausgekühlt ist, muss auch dieser zunächst auf eine Starttemperatur vorgewärmt werden. D. h., dass im Fall eines gefrorenen Betriebsstoffs 302 zunächst der Betriebsfall Vorwärmmodus V aktiviert wird. Wie bereits oben erwähnt strömt im Vorwärmmodus V der größte Teil der Kühlflüssigkeit durch den Verbrennungsmotor 100 hindurch und erwärmt diesen. Ein kleinerer Volumenstrom strömt im Vorwärmmodus V durch den Vorratsbehälter 300 hindurch und taut den Betriebsstoff 302 auf.

Ziel dabei ist es nicht, den Betriebsstoff 302 möglichst großvolumig aufzutauen, sondern gezielt wenigstens nur um eine Ansaugöffnung 371 z. B. eines Ansaugstutzens 370 für den Betriebsstoff 302 im Vorratsbehälter 300. Bevorzugt wird primär ein Ansaugbereich 301 des Betriebsstoffs 302 im Vorratsbehälter 300 erwärmt (vgl. FIG 4). Dies wird durch die Heizeinrichtung 330 der bevorzugt multifunktionalen Ansaugapparatur, also der Multifunktionseinheit 330, und ggf. der (Zusatz-)Heizeinrichtung 332 um einen Ansaugstutzen 370 herum realisiert. Aufgrund dieser bevorzugt doppelten Heizung ist von einer sicheren Verflüssigung des Betriebsstoffs 302 im Ansaugbereich 301 auszugehen.

Die FIG 4 zeigt eine erfindungsgemäße Vorratsbehälterheizung 50 mit dem Vorratsbehälter 300, der Ansaugöffnung 371 und der Heizeinrichtung 330, 332. Die Heizeinrichtung 330, 332 umfasst zwei Abschnitte 330, 332, wobei ein Abschnitt 330 hauptsächlich oder im Wesentlichen vertikal und der andere Abschnitt 332 hauptsächlich oder im Wesentlichen horizontal angeordnet ist. Eine horizontale Erstreckung soll dabei im Wesentlichen parallel zu einem Boden 304 des Vorratsbehälters 300 liegen. D. h. die beiden Abschnitte nehmen einen Winkel von bevorzugt 45° bis 135°, insbesondere einen Winkel von 90° ±20° zueinander ein.

Die Ansaugöffnung 371 ist dabei in der Nähe der Heizeinrichtung 330, 332 derart vorgesehen, dass die Ansaugöffnung 371 zu jeweils einem Ende bzw. jeweils einem Endabschnitt der Abschnitte 330, 332 der Heizeinrichtung 330, 332 benachbart, bevorzugt direkt benachbart zu diesen, vorgesehen ist. Eine Form der Abschnitte 330, 332 ist prinzipiell beliebig, es ist jedoch bevorzugt, dass der erste Abschnitt 330 eher länglich und der zweite Abschnitt 330 eher flächig ausgebildet ist. Gemäß der Erfindung können die beiden Abschnitte 330, 332 eine einzige oder zwei Heizeinrichtungen 330, 332 bilden. Sind zwei Heizeinrichtungen 330, 332 vorgesehen, so ist ein Abschnitt als Heizeinrichtung 330 und der andere Abschnitt 332 als (Zusatz-)Heizeinrichtung 332 ausgebildet.

Ein Heizelement der Heizeinrichtung 330 ist bevorzugt vertikal in einer Nähe des Ansaugstutzens 370 angeordnet. Es taut somit einen vertikalen Flüssigkeitszylinder (flüssiger Betriebsstoff 302.1) in einen gefrorenen Betriebsstoff 302.2, was gut in der FIG 4 zu sehen ist. Die bevorzugt bodennahe (Zusatz-)Heizeinrichtung 332 des Vorratsbehälters 300 taut den gefrorenen Betriebsstoff 302.2 von einer Unterseite her auf. Vor Allem bei einem geringen Volumen des Betriebsstoffs 302 im Vorratsbehälter 300 wird durch die bodennahe (Zusatz-)Heizeinrichtung 332 mehr Wärme in den gefrorenen Betriebsstoff 302.2 eingebracht.

Um die unten im Vorratsbehälter 300 befindliche Ansaugöffnung 371 entsteht bei dieser Anordnung der Heizeinrichtungen 330, 332 ein Flüssigkeitskissen im Bodenbereich ((Zusatz-)Heizeinrichtung 332) des Vorratsbehälters 300 und ein Flüssigkeitszylinder entlang der Heizeinrichtung 330. Damit sind wenigstens ausreichende Saugverhältnisse gegeben, weil die bodennahe (Zusatz-)Heizeinrichtung 332 ein flächiges Flüssigkeitspolster aufbaut und der vertikale Flüssigkeitszylinder um die Heizeinrichtung 330 herum eine Flüssigkeitssäule darstellt, die das unten liegende Flüssigkeitspolster unter Druck setzt und mit ihm in Fluidkommunikation steht. Es ist damit ferner gewährleistet, dass das unten liegende Flüssigkeitspolster immer in Kontakt mit gefrorenem Betriebsstoff 302.2 steht, womit ein kontinuierlicher Wärmeübergang zwischen diesen beiden Schichten gesichert ist.

Hat die Kühlflüssigkeit die Starttemperatur des Verbrennungsmotors 100 erreicht, dann wird der Verbrennungsmotor 100 gestartet und es tritt der Betriebsmodus B des laufenden Verbrennungsmotors 100 ein (FIG 2). Das Auftauen des gefrorenen Betriebsstoffs 302.2 wird über die Heizeinrichtung 330 und bevorzugt die (Zusatz-)Heizeinrichtung 332 fortgesetzt. Das Auftauen vollzieht sich jetzt schneller, weil eine Durchflussmenge der Kühlflüssigkeit aufgrund einer Pumpenkennlinie der Motorpumpe 140 höher wird und die Temperatur der Kühlflüssigkeit aufgrund der Abwärme des Verbrennungsmotors 100 steigt.

Bei einem Notstart (Notstartmodus N, vgl. FIG 2) sind keine Bedienhandlungen eines Schienenfahrzeugführers in einem Maschinenraum vorgesehen - beispielsweise Hähne öffnen. In außergewöhnlichen Situationen ist es notwendig, den Verbrennungsmotor 100 sofort zu starten. Diese Voraussetzungen werden vorliegend vollständig erfüllt. Bei einem Notstart schaltet das Vorwärmgerät 310 automatisch aus und der Start des Verbrennungsmotors 100 findet im Wesentlichen unmittelbar danach statt. Der Vorwärmkreis 30 wird automatisch über die Rückschlagventile 340, 352 entkoppelt und das motorgesteuerte Ventil 320 übernimmt wieder die Steuerung oder Regelung der Erwärmung des Betriebsstoffs 302.

Die Modi B, V, N können nur mit fluidmechanischen Baugruppen ohne eine Zusatzpumpe realisiert werden. Es wird in allen Modi B, V, N (Betriebsfälle) ein Überhitzen des Betriebsstoffs 302 und bei eingeschaltetem Vorwärmgerät 310 ein Einfrieren des Betriebsstoffs 302, insbesondere einer Harnstofflösung 302, unterbunden. Ferner gewährleistet nicht nur die Heizeinrichtung 330 ein Auftauen und/oder Aufwärmen, sondern der Ansaugbereich 301 wird bevorzugt mit der insbesondere mit der Heizeinrichtung 330 parallel oder in Reihe geschalteten (Zusatz-)Heizeinrichtung 332 erwärmt.

Gemäß der Erfindung erfolgt eine Integration der Zwischenleitung 350 mit Rückschlagventil 352. Diese Elemente verbinden den Vorwärmkreis 32 bzw. die Vorwärmleitung 31 des Verbrennungsmotors 100 mit dem Hauptwärmkreis 30 für die Erwärmung des Betriebsstoffs 320. Aufgrund dieser Anordnung ist sowohl bei Vorwärmung (Vorwärmmodus V) als auch im laufenden Betrieb (Betriebsmodus B) des Verbrennungsmotors 100 eine Erwärmung des Betriebsstoffs 320 ermöglicht. Diese Anordnung ermöglicht zudem, dass je nach einem Betriebsfall entweder die Steuerung und/oder Regelung des Schienenfahrzeugs bzw. des Verbrennungsmotors 100 oder die Steuerung und/oder Regelung der Temperatur durch das Vorwärmgerät 310 ein Gefrieren oder Überhitzen des Betriebsstoffs 320 unterbindet. Der Übergang vom Vorwärmmodus V in den Betriebsmodus B bei laufendem Verbrennungsmotor 100 kann ohne Bedienhandlungen im Maschinenraum durchgeführt werden und erfolgt automatisch.

Ferner erfolgt gemäß der Erfindung eine Integration der bodennahen (Zusatz-)Heizeinrichtung 332, welche in ein Kühlflüssigkeitsschema eingebunden ist. Dadurch kann die Ansaugöffnung 371 für den Betriebsstoff 320 vergleichsweise gut erwärmt und gegebenenfalls aufgetaut werden. Aufgrund dieser Anordnung ist sichergestellt, dass sich um die Ansaugöffnung 371 des Ansaugstutzens 370 im Ansaugbereich 310 immer ein flüssiger Betriebsstoff 320 befindet. Das sich ausbildende, unten liegende Flüssigkeitskissen kann normalerweise nicht leergesaugt werden, weil die vertikale Flüssigkeitssäule um die Heizeinrichtung 330 einen Fluiddruck unten auf den Betriebsstoff 320 erzeugt. Dadurch wird ein Auftauprozess begünstigt, weil auch der Kontakt zwischen gefrorenem 320.2 und aufgetautem Betriebsstoff 320.1 bestehen bleibt.

Gemäß der Erfindung ist eine Komplettheizung des Vorratsbehälters 300 obsolet, weil die Versorgung mit flüssigem Betriebsstoff 302 auf diese Weise sichergestellt ist. Das System benötigt keine elektrische Zusatzheizung, da das Vorwärmgerät 310 bevorzugt kraftstoffbetrieben ist. Natürlich kann das Vorwärmgerät 310 auch ein elektrisches Vorwärmgerät 310 sein. Ein Wechsel vom Vorwärmmodus V in den Betriebsmodus B und ggf. umgekehrt führt jeweils nicht zu einer Umkehr einer Flussrichtung der Kühlflüssigkeit in einem Wärmkreis des Vorratsbehälters 300. Und im Fall einer zu schwachen Pumpe 312 im Vorwärmgerät 310 kann eine weitere Pumpe in Reihe vor oder nach dem Vorwärmgerät 310 zugeschaltet sein.

## Patentansprüche

1. Vorratsbehälterheizung (50) für ein Schienenfahrzeug, insbesondere zur Erwärmung eines Reduktionsmittels (302) zur Abgasnachbehandlung, mit
einem Vorratsbehälter (300) für einen Betriebsstoff (302), einer Ansaugöffnung (371) im Vorratsbehälter (300) zum Ansaugen des Betriebsstoffs (302) und einer Heizeinrichtung (330, 332) im Vorratsbehälter (300) zur Erwärmung des Betriebsstoffs (302), wobei
die Heizeinrichtung (330, 332) zwei Abschnitte (330, 332) aufweist, und gegenüber einem Boden (304) des Vorratsbehälters (300) ein erster Abschnitt (330) der Heizeinrichtung (330, 332) im Wesentlichen senkrecht und ein zweiter Abschnitt (332) der Heizeinrichtung (330, 332) im Wesentlichen parallel angeordnet sind, **dadurch gekennzeichnet, dass**
die beiden Abschnitte (330, 332) der mit einer Kühlflüssigkeit des Schienenfahrzeugs durchströmbaren Heizeinrichtung (330, 332) fluidmechanisch parallel ausgebildet sind.

2. Vorratsbehälterheizung (50) gemäß vorhergehendem Anspruch, **dadurch gekennzeichnet, dass** sich der erste Abschnitt (330) der Heizeinrichtung (330, 332) bis an oder über einen maximalen Füllstand des Betriebsstoffs (302) erstreckt, und/oder
der zweite Abschnitt (330) der Heizeinrichtung (330, 332) bodennah im Vorratsbehälter (300) untergebracht ist, wobei bevorzugt ein Spalt zwischen dem zweiten Abschnitt (330) der Heizeinrichtung (330, 332) und dem Boden (304) vorgesehen ist.

3. Vorratsbehälterheizung (50) gemäß einem der vorhergehenden Ansprüche, **dadurch gekennzeichnet, dass**:
• der Betriebsstoff (302) ein Reduktionsmittel (302), bevorzugt eine Harnstofflösung zur Abgasnachbehandlung (302) ist;
• ein Ansaugstutzen (370) im Vorratsbehälter (300) oder der Vorratsbehälter (300) die Ansaugöffnung (371) aufweist;
• die Ansaugöffnung (371) in einem Bereich des Vorratsbehälters (300) vorgesehen ist, welcher an beide Abschnitte (330, 332) der Heizeinrichtung (330, 332) angrenzt; der erste Abschnitt (330) der Heizeinrichtung (330, 332) im Wesentlichen stab- oder zylinderförmig ausgebildet ist, der zweite Abschnitt (330) der Heizeinrichtung (330, 332) im Wesentlichen kissen- oder quaderförmig ausgebildet ist;
• das die beiden Abschnitte (330, 332) eine einzige Heizeinrichtung (330, 332) konstituieren; und/oder
• zwei voneinander separate Abschnitte (330, 332) die Heizeinrichtung (330, 332) konstituieren.

4. Betriebsstoffheizung (3) für ein Schienenfahrzeug, insbesondere zur Erwärmung eines Reduktionsmittels (302) zur Abgasnachbehandlung, mit
einem Kühlkreis (10) für einen Verbrennungsmotor (100) und einem an den Kühlkreis (10) angeschlossenen Hauptwärmkreis (30) zum Erwärmen eines Betriebsstoffs (302) in einem Vorratsbehälter (300), wobei
eine durch den Hauptwärmkreis (30) zirkulierbare Kühlflüssigkeit mittels einer Pumpe (140) des Kühlkreises (10) in einem Betriebsmodus (B) der Betriebsstoffheizung (3) durch den Hauptwärmkreis (30) pumpbar ist, und
der Hauptwärmkreis (30) unter einer Umgehung seiner Zuflussleitung (322) mittels einer Vorwärmleitung (31) überbrückbar ist, **dadurch gekennzeichnet, dass**
die Betriebsstoffheizung (3) eine Vorratsbehälterheizung (50) gemäß einem der vorhergehenden Ansprüche aufweist.

5. Betriebsstoffheizung (3) gemäß vorhergehendem Anspruch, **dadurch gekennzeichnet, dass**:
• der Hauptwärmkreis (30) mittels einer Zuflussleitung (322) stromabwärts der Pumpe (140) und mittels einer Abflussleitung (324) stromaufwärts der Pumpe (140) an den Kühlkreis (10) angeschlossen ist;
• der Hauptwärmkreis (30), insbesondere die Zuflussleitung (322), ein Ventil (320) aufweist, mittels welchem anhand einer Temperatur des Betriebsstoffs (302) ein Kühlflüssigkeitsstrom durch den Hauptwärmkreis (30) hindurch einstellbar ist;
• der Hauptwärmkreis (30) im Vorratsbehälter (300) wenigstens eine Heizeinrichtung (330, 332) aufweist, mittels welcher eine Säule und ggf. ein bodennahes Kissen des Betriebsstoffs (302) erwärmbar bzw. auftaubar ist; und/oder
• ein Ansaugbereich (301) des Betriebsstoffs (302) im Vorratsbehälter (300) bzw. eine Ansaugöffnung (371) mittels einer Zusatzheizeinrichtung (332) erwärmbar bzw. auftaubar ist.

6. Betriebsstoffheizung (3) gemäß einem der vorhergehenden Ansprüche, **dadurch gekennzeichnet, dass** die Vorwärmleitung (31) einerseits bevorzugt stromabwärts der Heizeinrichtung (330, 332) an den Hauptwärmkreis (30) und andererseits an den Kühlkreis (10) bevorzugt stromaufwärts der Zylinder (110) angeschlossen ist.

7. Betriebsstoffheizung (3) gemäß einem der vorhergehenden Ansprüche, **dadurch gekennzeichnet, dass**:
• an/in der Vorwärmleitung (31) stromabwärts der Heizeinrichtung (330, 332) ein Vorwärmgerät (310) und stromabwärts des Vorwärmgeräts (310) ein Rückschlagventil (340) vorgesehen ist;
• an die Vorwärmleitung (31) stromabwärts des Vorwärmgeräts (310) und stromaufwärts des Rückschlagventils (340) eine Zwischenleitung (350) angeschlossen ist, welche ferner an den Hauptwärmkreis (30) angeschlossen ist; und/oder
• der Kühlkreis (10) und der Hauptwärmkreis (30) mittels der Vorwärmleitung (31) und der Zwischenleitung (350) in einen Vorwärmkreis (32) überführbar sind, mittels welchem der Verbrennungsmotor (100) und/oder der Betriebsstoff (302) im Vorratsbehälter (300) vorwärmbar ist bzw. sind.

8. Betriebsstoffheizung (3) gemäß einem der vorhergehenden Ansprüche, **dadurch gekennzeichnet, dass**:
• der Vorwärmkreis (32; 32.1, 32.2) zwei Teilkreise (32.1, 32.2) aufweist, wobei in einem Vorwärmmodus (V) der Betriebsstoffheizung (3) die Kühlflüssigkeit durch die zwei Teilkreise (32.1, 32.2) strömbar ist;
• im ersten Teilkreis (32.1) des Vorwärmkreises (32; 32.1, 32.2) der Kühlkreis (10) von der Kühlflüssigkeit im Wesentlichen parallel durchströmbar ist;
• im zweiten Teilkreis (32.2) des Vorwärmkreises (32; 32.1, 32.2) die Kühlflüssigkeit im Wesentlichen vollständig zirkulierbar ist; und/oder
• im Vorwärmmodus (V) die Kühlflüssigkeit von einer Pumpe in der Vorwärmleitung (31) und/oder einer Pumpe des Vorwärmgeräts (310) durch die zwei Teilkreise (32.1, 32.2) hindurchpumpbar ist.

9. Betriebsstoffheizung (3) gemäß einem der vorhergehenden Ansprüche, **dadurch gekennzeichnet, dass** die Betriebsstoffheizung (3) derart ausgebildet ist, dass bei einem Wechsel vom Vorwärmmodus (V) in den Betriebsmodus (B) und umgekehrt, keine Umkehr einer Zirkulationsrichtung durch Leitungen des Hauptwärmkreises (30) erfolgt.

10. Betriebsstoffheizung (3) gemäß einem der vorhergehenden Ansprüche, **dadurch gekennzeichnet, dass**:
• die Pumpe (140) als eine verbrennungsmotorbetriebene oder eine elektrisch betriebene Pumpe (140) ausgebildet ist;
• das Ventil (320) als ein motorgesteuertes Ventil (320) ausgebildet ist;
• das Ventil (320) stromaufwärts der Heizeinrichtung (330) im Hauptwärmkreis (300), insbesondere an/in der Zuflussleitung (322) vorgesehen ist;
• das Vorwärmgerät (310) als ein kraftstoffbetriebenes oder ein elektrisches Vorwärmgerät (310) ausgebildet ist;
• an/in der Zwischenleitung (350) stromaufwärts der Heizeinrichtung (330, 332) ein Rückschlagventil (352) vorgesehen ist;
• im Vorwärmmodus (V) der Verbrennungsmotor (100) und/oder die Pumpe (140) inaktiv ist bzw. sind; und/oder
• in der Vorwärmleitung (31) eine Pumpe stromaufwärts oder stromabwärts des Vorwärmgeräts (310) vorgesehen ist.

11. Antrieb (1), insbesondere Dieselantrieb (1), für ein Schienen- oder Kraftfahrzeug, oder Schienen- oder Kraftfahrzeug, **dadurch gekennzeichnet, dass**
der Antrieb (1) oder das Schienen- oder Kraftfahrzeug eine Vorratsbehälterheizung (50) nach einem der Ansprüche 1 bis 3 aufweist; und/oder
der Antrieb (1) oder das Schienen- oder Kraftfahrzeug eine Betriebsstoffheizung (3) nach einem der Ansprüche 4 bis 10 aufweist.

## Claims

1. Reservoir heating system (50) for a rail vehicle, particularly for heating a reducing agent (302) for aftertreatment of exhaust gas, with
a reservoir (300) for an operating agent (302), a suction opening (371) in the reservoir (300) for sucking in the operating agent (302) and a heating device (330, 332) in the reservoir (300) for heating the operating agent (302), wherein
the heating device (330, 332) has two sections (330, 332) and in relation to a floor (304) of the reservoir (300) a first section (330) of the heating device (330, 332) is arranged essentially at right angles and a second section (332) of the heating device (330, 332) is arranged essentially in parallel, **characterised in that**
the two sections (330, 332) of the heating device (330, 332), through which a coolant liquid of the rail vehicle can flow, are embodied fluid-mechanically in parallel.

2. Reservoir heating system (50) according to the preceding claim, **characterised in that** the first section (330) of the heating device (330, 332) extends up to or beyond a maximum fill level of the operating agent (302), and/or
the second section (330) of the heating device (330, 332) is accommodated close to the floor in the reservoir (300), wherein preferably a gap is provided between the second section (332) of the heating device (330, 332) and the floor (304) .

3. Reservoir heating system (50) according to one of the preceding claims, **characterised in that**:
• the operating agent (302) is a reducing agent (302), preferably a urea solution for aftertreatment of exhaust gas (302);
• a suction connector (307) in the reservoir (300) or the reservoir (300) features the suction opening (371);
• the suction opening (371) is provided in an area of the reservoir (300), which adjoins both sections (330, 332) of the heating device (330, 332); the first section (330) of the heating device (330, 332) is essentially embodied in the shape of a rod or cylinder; the second section (330) of the heating device (330, 332) is essentially embodied in the shape of a cushion or a cube;
• the two sections (330, 332) constitute a single heating device (330, 332); and/or
• two sections (330, 332) separate from one another constitute the heating device (330, 332).

4. Operating agent heating system (3) for a rail vehicle, particularly for heating a reducing agent (302) for aftertreatment of exhaust gas, with
a coolant circuit (10) for an internal combustion engine (100) and a main heating circuit (30), for heating an operating agent (302) in a reservoir (300), connected to the coolant circuit (10), wherein
a coolant liquid able to be circulated through the main heating circuit (30) is able to be pumped by means of a pump (140) of the coolant circuit (10) through the main heating circuit (30) in an operating mode (B) of the operating agent heating system (3), and
the main heating circuit (30), by bypassing its inflow line (322), is able to be bridged over by means of a preheating line (31), **characterised in that**
the operating agent heating system (3) has a reservoir heating system (50) according to one of the preceding claims.

5. Operating agent heating system (3) according to the preceding claim, **characterised in that**:
• the main heating circuit (30) is connected to the coolant circuit (10) by means of an inflow line (322) downstream of the pump (140) and by means of an outflow line (324) upstream of the pump (140);
• the main heating circuit (30), especially the inflow line (322), has a valve (320) by means of which, on the basis of a temperature of the operating agent (302), a flow of coolant liquid through the main heating circuit (30) is able to be set;
• the main heating circuit (30) in the reservoir (300) has at least one heating device (330, 332), by means of which a column and if necessary a cushion of the operating agent (302) close to the floor is able to be heated or thawed; and/or
• a suction region (301) of the operating agent (302) in the reservoir (300) or a suction opening (371) is able to be heated or thawed by means of an additional heating device (332) .

6. Operating agent heating system (3) according to one of the preceding claims, **characterised in that** the preheating line (31) on one side is connected to the main heating circuit (30) preferably downstream of the heating device (330, 322) and on the other side is connected to the coolant circuit (10) preferably upstream of the cylinders (110).

7. Operating agent heating system (3) according to one of the preceding claims, **characterised in that**:
• a preheating device (310) is provided on/in the preheating line (31) downstream of the heating device (330, 322) and a non-return valve (340) is provided downstream of the preheating device (310);
• an intermediate line (350) is connected to the preheating line (31) downstream of the preheating device (310) and upstream of the non-return valve (340), which is further connected to the main heating circuit (30);
and/or
• the coolant circuit (10) and the main heating circuit (30) are able to be transferred by means of the preheating line (31) and the intermediate line (350) into a preheating circuit (32), by means of which the internal combustion engine (100) and/or the operating agent (302) in the reservoir (300) is or are able to be preheated.

8. Operating agent heating system (3) according to one of the preceding claims, **characterised in that**:
• the preheating circuit (32; 32.1, 32.2) has two sub-circuits (32.1, 32.2), wherein in a preheating mode (V) of the operating agent heating system (3), the coolant liquid is able to flow through the two sub-circuits (32.1, 32.2);
• in the first sub-circuit (32.1) of the preheating circuit (32; 32.1, 32.2), the coolant liquid is essentially able to flow in parallel through the coolant circuit (10);
• in the second sub-circuit (32.2) of the preheating circuit (32; 32.1, 32.2), the coolant liquid is essentially able to circulate fully; and/or
• in the preheating mode (V) the coolant liquid is able to be pumped by a pump in the preheating line (31) and/or a pump (312) of the preheating device (310) through the two sub-circuits (32.1, 32.2).

9. Operating agent heating system (3) according to one of the preceding claims, **characterised in that** the operating agent heating system (3) is embodied such that, when there is a switch from preheating mode (V) into operating mode (B) and vice versa, there is no switch in a direction of circulation through lines of the main heating circuit (30).

10. Operating agent heating system (3) according to one of the preceding claims, **characterised in that**:
• the pump (140) is embodied as an internal combustion engine-driven pump or an electrically-driven pump (140);
• the valve (320) is embodied as a motorised valve (320);
• the valve (320) is provided upstream of the heating device (330) in the main heating circuit (300), especially on/in the inflow line (322);
• the preheating device (310) is embodied as a fuel-driven or an electrical preheating device (310);
• a non-return valve (352) is provided on/in the intermediate line (350) upstream of the heating device (330, 332);
• in preheating mode (V) the internal combustion engine (100) and/or the pump (140) is or are inactive; and/or
• in the preheating line (31) a pump is provided upstream or downstream of the preheating device (310).

11. Drive (1), in particular a diesel drive (1), for a rail vehicle or a motor vehicle, or rail or motor vehicle, **characterised in that**
the drive (1) or the rail vehicle or motor vehicle has a reservoir heating system (50) according to one of claims 1 to 3; and/or
the drive (1) or the rail vehicle or motor vehicle has an operating agent heating system (3) according to one of claims 4 to 10.

## Revendications

1. Système de chauffage de réservoir (50) pour un véhicule ferroviaire, en particulier pour le réchauffage d'un agent réducteur (302) pour le post-traitement de gaz d'échappement, avec
un réservoir (300) pour un carburant (302), un orifice d'aspiration (371) dans le réservoir (300) pour l'aspiration du carburant (302) et un dispositif de chauffage (330, 332) dans le réservoir (300) pour le réchauffage du carburant (302), dans lequel
le dispositif de chauffage (330, 332) comprend deux sections (330, 332), et une première section (330) du dispositif de chauffage (330, 332) est disposée de manière essentiellement perpendiculaire à un fond (304) du réservoir (300) et une deuxième section (332) du dispositif de chauffage (330, 332) est disposée de manière essentiellement parallèle à un fond (304) du réservoir (300), **caractérisé en ce que**
les deux sections (330, 332) du dispositif de chauffage (330, 332) pouvant être traversé par un liquide de refroidissement du véhicule ferroviaire sont conçues de manière fluidiquement parallèle.

2. Système de chauffage de réservoir (50) selon la revendication précédente, **caractérisé en ce que** la première section (330) du dispositif de chauffage (330, 332) s'étend jusqu'à ou au-delà d'un niveau maximal du carburant (302), et/ou
la deuxième section (330) du dispositif de chauffage (330, 332) est logée à proximité du fond dans le réservoir (300), dans lequel une fente est de préférence prévue entre la deuxième section (330) du dispositif de chauffage (330, 332) et le fond (304).

3. Système de chauffage de réservoir (50) selon l'une des revendications précédentes, **caractérisé en ce que** :
• le carburant (302) est un agent réducteur (302), de préférence une solution d'urée pour le post-traitement de gaz d'échappement (302) ;
• une tubulure d'aspiration (370) dans le réservoir (300) ou le réservoir (300) comprend l'orifice d'aspiration (371) ;
• l'orifice d'aspiration (371) est prévu dans une zone du réservoir (300), lequel est adjacent aux deux sections (330, 332) du dispositif de chauffage (330, 332) ; la première section (330) du dispositif de chauffage (330, 332) se présente essentiellement sous forme de tige ou de cylindre, la deuxième section (330) du dispositif de chauffage (330, 332) se présente essentiellement sous forme de coussin ou de parallélépipède ;
• les deux sections (330, 332) constituent un unique dispositif de chauffage (330, 332) ; et/ou
• deux sections distinctes l'une de l'autre (330, 332) constituent le dispositif de chauffage (330, 332).

4. Système de chauffage de carburant (3) pour un véhicule ferroviaire, en particulier pour le réchauffage d'un agent réducteur (302) pour le post-traitement de gaz d'échappement, avec
un circuit de refroidissement (10) pour un moteur à combustion (100) et un circuit de réchauffage principal (30) raccordé au circuit de refroidissement (10) pour le réchauffage d'un carburant (302) dans un réservoir (300), dans lequel
un liquide de refroidissement pouvant circuler à travers le circuit de réchauffage principal (30) est pompable à travers le circuit de réchauffage principal (30) au moyen d'une pompe (140) du circuit de refroidissement (10) dans un mode de fonctionnement (B) du système de chauffage de carburant (3), et
le circuit de réchauffage principal (30) peut être court-circuité lors d'une dérivation de sa conduite d'amenée (322) au moyen d'une conduite de préchauffage (31), **caractérisé en ce que**
le système de chauffage de carburant (3) comprend un système de chauffage de réservoir (50) selon l'une des revendications précédentes.

5. Système de chauffage de carburant (3) selon la revendication précédente, **caractérisé en ce que** :
• le circuit de réchauffage principal (30) est raccordé au circuit de refroidissement (10) au moyen d'une conduite d'amenée (322) en aval de la pompe (140) et au moyen d'une conduite d'évacuation (324) en amont de la pompe (140) ;
• le circuit de réchauffage principal (30), en particulier la conduite d'amenée (322), comprend une soupape (320), au moyen de laquelle un flux de liquide de refroidissement est ajustable à travers le circuit de réchauffage principal (30) à l'aide d'une température du carburant (302) ;
• le circuit de réchauffage principal (30) dans le réservoir (300) comprend au moins un dispositif de chauffage (330, 332), au moyen duquel une colonne et éventuellement un coussin proche du fond du carburant (302) peuvent être réchauffés ou décongelés ; et/ou
• une zone d'aspiration (301) du carburant (302) dans le réservoir (300) ou un orifice d'aspiration (371) peut être réchauffé(e) ou décongelé(e) au moyen d'un dispositif de chauffage supplémentaire (332).

6. Système de chauffage de carburant (3) selon l'une des revendications précédentes, **caractérisé en ce que** la conduite de préchauffage (31) est raccordée d'une part de préférence en aval du dispositif de chauffage (330, 332) au circuit de réchauffage principal (30) et d'autre part au circuit de refroidissement (10) de préférence en amont du cylindre (110).

7. Système de chauffage de carburant (3) selon l'une des revendications précédentes, **caractérisé en ce que** :
• au niveau de/dans la conduite de préchauffage (31) en aval du dispositif de chauffage (330, 332) est prévu un appareil de préchauffage (310) et en aval de l'appareil de préchauffage (310) est prévue une soupape de retenue (340) ;
• une conduite intermédiaire (350) est raccordée à la conduite de préchauffage (31) en aval de l'appareil de préchauffage (310) et en amont de la soupape de retenue (340), laquelle conduite intermédiaire (350) est en outre raccordée au circuit de réchauffage principal (30) ; et/ou
• le circuit de refroidissement (10) et le circuit de réchauffage principal (30) peuvent être amenés au moyen de la conduite de préchauffage (31) et de la conduite intermédiaire (350) dans un circuit de préchauffage (32), au moyen duquel le moteur à combustion (100) et/ou le carburant (302) dans le réservoir (300) peuvent être préchauffés.

8. Système de chauffage de carburant (3) selon l'une des revendications précédentes, **caractérisé en ce que** :
• le circuit de préchauffage (32 ; 32.1, 32.2) comprend deux circuits partiels (32.1, 32.2), dans lequel dans un mode de préchauffage (V) du système de chauffage de carburant (3), le liquide de refroidissement peut traverser les deux circuits partiels (32.1, 32.2) ;
• dans le premier circuit partiel (32.1) du circuit de préchauffage (32 ; 32.1, 32.2), le circuit de refroidissement (10) peut être traversé de manière essentiellement parallèle par le liquide de refroidissement ;
• le liquide de refroidissement peut circuler de manière essentiellement complète dans le deuxième circuit partiel (32.2) du circuit de préchauffage (32 ; 32.1, 32.2) ; et/ou
• dans le mode de préchauffage (V), le liquide de refroidissement est pompable à travers les deux circuits partiels (32.1, 32.2) par une pompe dans la conduite de préchauffage (31) et/ou une pompe de l'appareil de préchauffage (310).

9. Système de chauffage de carburant (3) selon l'une des revendications précédentes, **caractérisé en ce que** le système de chauffage de carburant (3) est conçu de telle sorte que lors d'un passage du mode de préchauffage (V) au mode de fonctionnement (B) et inversement, il ne s'ensuive aucune inversion d'une direction de circulation à travers des conduites du circuit de réchauffage principal (30).

10. Système de chauffage de carburant (3) selon l'une des revendications précédentes, **caractérisé en ce que** :
• la pompe (140) est conçue sous la forme d'une pompe fonctionnant avec un moteur à combustion ou à fonctionnement électrique (140) ;
• la soupape (320) est conçue sous la forme d'une soupape motorisée (320) ;
• la soupape (320) est prévue en amont du dispositif de chauffage (330) dans le circuit de réchauffage principal (300), en particulier au niveau de/dans la conduite d'amenée (322) ;
• l'appareil de préchauffage (310) est conçu sous la forme d'un appareil de préchauffage fonctionnant au combustible ou électrique (310) ;
• une soupape de retenue (352) est prévue au niveau de/dans la conduite intermédiaire (350) en amont du dispositif de chauffage (330, 332) ;
• dans le mode de préchauffage (V), le moteur à combustion (100) et/ou la pompe (140) sont inactifs ; et/ou
• une pompe est prévue en amont ou en aval de l'appareil de préchauffage (310) dans la conduite de préchauffage (31).

11. Propulsion (1), en particulier propulsion diesel (1), pour un véhicule ferroviaire ou automobile, ou véhicule ferroviaire ou automobile, caractérisé(e) en ce que la propulsion (1) ou le véhicule ferroviaire ou automobile comprend un système de chauffage de réservoir (50) selon l'une des revendications 1 à 3 ; et/ou
la propulsion (1) ou le véhicule ferroviaire ou automobile comprend un système de chauffage de carburant (3) selon l'une des revendications 4 à 10.
